# EUROPÄISCHE PATENTANMELDUNG

(11) **EP 1 466 521 A2**
(43) Veröffentlichungstag der Anmeldung: **13.10.2004**
(21) Anmeldenummer: 04008652.2
(22) Anmeldetag: 08.04.2004
(51) Int. Cl.: A01J 7/02

(54) **Verfahren zum Reinigen der milchführenden Teile einer Melkvorrichtung sowie Melkvorrichtung mit einer Einrichtung zum Reinigen der milchführenden Teile**

(30) Priorität: 11.04.2003 DE 10316585
(71) Anmelder: WestfaliaSurge GmbH, 59302 Oelde (DE)
(72) Erfinder: Schulze-Wartenhorst, Bernhard, 48231 Warendorf (DE); Harms, Jelto, 26670 Uplengen (DE)
(74) Vertreter: Neumann, Ditmar

(57) **Zusammenfassung**

Zum Reinigen der milchführenden Teile einer Melkvorrichtung wird ein Verfahren sowie eine Melkvorrichtung mit einer Einrichtung zum Reinigen der milchführenden Teile vorgeschlagen. Es wird vorgeschlagen, dass die milchführenden Teile der Melkvorrichtung in wenigstens zwei Bereiche, einen primären und einen sekundären Bereich, unterteilt sind und die Reinigung der wenigstens zwei Bereiche auch unabhängig voneinander durchgeführt werden kann. Der primäre Bereich umfasst wenigstens einen Zitzenbecher und einen Pufferspeicher und der sekundäre Bereich ist dem primären Bereich nachgeschaltet.

## Beschreibung

Der Gegenstand der Erfindung bezieht sich auf ein Verfahren zum Reinigen der milchführenden Teile einer Melkvorrichtung sowie auf eine Melkvorrichtung mit einer Einrichtung zum Reinigen der milchführenden Teile.

Während eines Melkvorgangs gelangt die gemolkene Milch aus den Melkbechern über einen Milchschlauch in eine Melkleitung und über weitere Bestandteile der Melkanlage in einen Tank für verwertbare Milch. Während des Melkvorgangs kann eine Überprüfung der Qualität der Milch durchgeführt werden. Wird festgestellt, dass die Qualität der Milch nicht ausreichend ist, so wird diese verworfen. Hierzu kann die Melkanlage einen Sammeltank aufweisen, in den die nicht verwertbare Milch geleitet wird. Da Rohmilch ein Ausgangsprodukt für Lebensmittel ist, bedarf es einer hohen Hygiene, um den Qualitätsansprüchen Genüge zu tun. Es ist daher notwendig, die milchführenden Teile der Melkanlage zu reinigen.

Durch die DE 32 08 197 C1 ist beispielsweise eine Vorrichtung zur automatischen Spülung von Absaug-Melkanlagen, bei denen beim Melken die Milch und beim Spülen die Reinigungslösung in einem ständig unter Unterdruck stehenden Milchabscheider, der über einen ständig unter Druck stehenden Sicherheitsabscheider an eine Unterdruckquelle angeschlossen ist, eingesogen werden und von diesem mittels einer Milchschleuse weitergeleitet wird. Die Milchschleuse weist einen Schwimmkörper auf, der beim Auffüllen mit Flüssigkeit Ventile betätigt, die eine die Milchschleuse mit dem Milchabscheider verbindende Unterdruckleitung verschließen und eine zur äußeren Atmosphäre führenden und eine Ventilklappe aufweisenden Leitung öffnen, sowie ein Spülautomat über eine Vorlauf- und Abflussleitung mit der Melkanlage flussleitung mit der Melkanlage verbunden ist. Hierdurch wird während eines Spülvorgangs sichergestellt, dass eine wechselweise Spülung von Milchschleuse und Sicherheitsabscheidung automatisch durchgeführt werden kann, ohne dass atmosphärische Luft aus der Vorlaufleitung des Spülautomaten in die Milchschleuse bzw. aus der Milchschleuse in die Vorlaufleitung gelangt.

Des weiteren ist beispielsweise durch die EP 0 603 150 A1 eine Reinigungsvorrichtung zum Reinigen von Melkanlagen mit einem Vorlaufbehälter zur Aufbereitung einer Reinigungsflüssigkeit und einer Spülvorrichtung für das Melkzeug oder dergleichen der Melkanlage bekannt. Bei dieser Reinigungsvorrichtung wird eine erste Reinigungsflüssigkeit aus dem Vorratsbehälter über eine Verbindungsleitung in den Vorlaufbehälter gepumpt, wobei in der Dosiereinrichtung der Reinigungsmittelgehalt dieser Reinigungsflüssigkeit geprüft wird. Nach Abschluss des Reinigungsvorgangs erfolgt eine Rückführung der Flüssigkeit in den Vorratsbehälter, worauf die Reinigungsanlage beispielsweise für einen neuen Reinigungsvorgang mit einer zweiten Reinigungsflüssigkeit bereit ist, die dazu aus dem Vorratsbehälter über eine Leitung in den Vorratsbehälter gepumpt wird.

Es ist bekannt, dass die Reinigung der milchführenden Teile einer Melkvorrichtung in mehreren Schritten durchgeführt wird. Hierbei kann der Reinigungsvorgang wenigstens eine Spülung, eine Desinfizierung sowie den eigentlichen Reinigungsschritt beinhalten.

Im Zuge der Technisierung der Milchviehbetriebe nimmt der Automatisierungsgrad der Melksysteme ständig zu. Die Effektivität solcher Melksysteme ist auch von der Verfügbarkeit des gesamten Melksystems abhängig. Die Verfügbarkeit eines solchen Melksystems wird wesentlich durch die Reinigung der Melkanlage beeinflusst.

Hiervon ausgehend liegt der vorliegenden Erfindung die Zielsetzung zugrunde, die Verfügbarkeit einer Melkanlage zu erhöhen.

Diese Aufgabe wird erfmdungsgemäß durch ein Verfahren zum Reinigen der milchführenden Teile einer Melkvorrichtung nach Anspruch 1 sowie durch eine Melkvorrichtung mit einer Einrichtung zum Reinigen der milchführenden Teile gemäß Anspruch 14 gelöst. Vorteilhafte Weiterbildungen und Ausgestaltungen des Verfahrens bzw. der Melkvorrichtung sind Gegenstand der abhängigen Ansprüche.

Das erfindungsgemäße Verfahren zum Reinigen der milchführenden Teile einer Melkvorrichtung zeichnet sich dadurch aus, dass die milchführenden Teile der Melkvorrichtung in wenigstens zwei Bereiche, einen primären und einen sekundären Bereich, unterteilt sind und die Reinigung der wenigstens zwei Bereiche auch unabhängig voneinander durchgeführt wird. Der primäre Bereich umfasst wenigstens einen Zitzenbecher und einen Pufferspeicher und der sekundäre Bereich ist dem primären Bereich nachgeschaltet.

Vorzugsweise ist es möglich, den sekundären Bereich während des Melkens zu reinigen. Vorzugsweise wird der primäre Bereich zwischen zwei aufeinanderfolgenden Melkvorgängen gereinigt. Das kann z.B. mit klarem Wasser oder einem Reinigungs- oder Spülmittel erfolgen Auch der Einsatz eines Desinfektionsmittels ist möglich.

Es kann wenigstens ein dritter Bereich vorgesehen. Vorzugsweise wird der Druckbereich unabhängig vom Vakuumbereich gereinigt. Vorzugsweise umfasst ist der sekundäre Bereich im Druckbereich vorgesehen und beginnt vorzugsweise an der Milchpumpe.

Diesem erfindungsgemäßen Verfahren liegt die Überlegung zugrunde, dass während eines Melkvorgangs nicht jedes milchführende Teil der Melkvorrichtung zur Verfügung stehen muss. Dies bedeutet, dass die milchführenden Teile, die gerade während eines Melkvorgangs nicht zur Verfügung stehen müssen, einem Reinigungsvorgang unterzogen werden können. Durch diese Maßnahme wird die Verfügbarkeit der Melkanlage erhöht. Als Folge kann mit einer höheren Durchsatzleistung an gemolkenen Tieren, insbesondere Kühen, pro Tag gerechnet werden. Die Effektivität der Melkanlage wird hierdurch erheblich gesteigert.

Gemäß einer vorteilhaften Ausgestaltung des erfindungsgemäßen Verfahrens wird vorgeschlagen, dass der primäre Bereich zwischen zwei aufeinanderfolgenden Melkvorgängen gereinigt wird. Dies hat den Vorteil, dass während der Zeitspanne, innerhalb der kein Melkvorgang stattfindet, die milchführenden Teile eines primären Bereichs einem Reinigungsvorgang unterzogen werden können. Insbesondere wird vorgeschlagen, dass die Reinigung des primären Bereichs während eines Tierwechsels am Melkplatz erfolgt.

Erfahrungsgemäß steht eine gewisse Zeitspanne zur Verfügung, bis ein Tier den Melkplatz verlässt und ein anderes Tier den Melkplatz für einen Melkvorgang betritt und eine Melkposition einnimmt. Die Reinigung des primären Bereiches kann auch während einer Melkpause erfolgen. Die Melkpause soll auch dazu geeignet sei, den Reinigungsvorgang durchführen zu können. Bei einer Melkpause kann es sich um den zeitlichen Abstand zwischen zwei aufeinanderfolgenden Melkvorgängen zweier verschiedener Tiere oder um einen besuchsarmen Zeitpunkt handeln.

Wann eine Melkpause oder eine besuchsarme Zeit vorliegt, kann aus historischen Daten ermittelt werden. Hierbei kann eine rechnerische Ableitung der Melkpause oder des besuchsarmen Zeitpunktes aus den historischen Daten erfolgen. Sind historische Daten bekannt, so kann anhand dieser Daten geschätzt werden, wann eine Melkpause oder eine besuchsarme Zeit vorliegt. Die Bestimmung eines geeigneten Zeitpunktes kann auch beim Melken in Abhängigkeit vom Status der aktuellen Melkung erfolgen und z.B. während eines Melkvorgangs durchgeführt werde, wenn voraussichtlich noch genügend Zeit verbleibt.

Die Prognose eines besuchsarmen Zeitpunktes bzw. einer Melkpause kann auch unter Beachtung des aktuellen Verhaltens der Tiere ermittelt werden. Hierdurch wird eine Anpassung an die aktuellen Gegebenheiten des Tierverhaltens ermöglicht. Insbesondere wird vorgeschlagen, dass bei der Bestimmung der Melkpause, bzw. des besuchsarmen Zeitpunktes eine Positionsbestimmung und das aktuell Verhalten der Tiere Berücksichtigung findet.

Ist beispielsweise aus der Positionsbestimmung erkennbar, dass sich die Tiere in Richtung der Melkanlage bewegen, so kann es zweckmäßig sein, die Dauer des Reinigungsvorgangs an die neue Gegebenheit anzupassen. Gegebenenfalls wird auf einen Reinigungsvorgang völlig verzichtet. Wird durch die Positionsbestimmung festgestellt, dass sich die Tiere nicht in Richtung der Melkvorrichtung bewegen, so kann ein Reinigungsvorgang durchgeführt werden.

Die Reinigung der Bereiche kann auch zu festen Zeitpunkten erfolgen. Die Bestimmung der festen Zeitpunkte erfolgt auf der Basis der historischen Daten, wobei bei den festen Zeitpunkten auch das aktuelle Verhalten der Tiere vorzugsweise berücksichtigt wird. Das vorgeschlagene Verfahren eignet sich insbesondere auch für die Reinigung der milchführenden Teile einer Karussellmelkanlage.

Der sekundäre Bereich kann auch ein Nebenbereich sein, der z.B. für eine automatische Probennahme für z.B. einen Progesterontest geeignet ist. Dann kann eine automatische Reinigung durchgeführt werden, nachdem die Probennnahme abgeschlossen ist. Dadurch wird die Verschleppung von Keimen verhindert oder wenigstens reduziert. Für einen Reinigungsvorgang im Nebenbereich reicht in einfachen Fällen ein Spülen mit Wasser aus..

Das erfindungsgemäße Verfahren kann auch bei Fischgrätenmelkständen, Gruppenmelkständen jeglicher Art, sowie sonstigen Melkanlagen mit einzelnen oder mehreren Melkplätzen eingesetzt werden. Des weiteren eignet sich die Erfindung auch für den Einsatz bei halb- und vollautomatischen Melksystemen und insbesondere auch bei robotergestützten Melksystemen.

Nach einer noch weiteren vorteilhaften Ausgestaltung des Verfahrens wird vorgeschlagen, dass der primäre Bereich wenigstens einen Zitzenbecher oder wenigstens ein Melkzeug und ein mit dem Zitzenbecher/demMelkzeug verbundenen Pufferspeicher bzw. Melkgefäß, das eine Ableitung aufweist, umfasst, und eine Flüssigkeit zum Reinigen des primären Bereichs durch das Melkzeug ein- und über die Ableitung abgeleitet wird.

Der Reinigungsvorgang des primären Bereichs wird mit wenigstens einer Spülund/oder einer Desinfektions- und/oder Reinigungsflüssigkeit durchgeführt. Welche Reinigungsmaßnahme ergriffen wird, ist davon abhängig, welcher Reinigungsgrad erzielt werden soll. Ein einfaches Desinfizieren kann während des Tierwechsels erfolgen, da dieser Vorgang zeitsparend vollzogen und damit der Melkplatz hierdurch nicht blockiert wird.

Gemäß einer noch weiteren vorteilhaften Ausbildung des Verfahrens wird vorgeschlagen, dass der Sekundärbereich während eines Melkvorgangs gereinigt wird. Die Reinigung erfolgt hierbei, ohne dass es zu einer Beeinflussung des Melkvorgangs kommt, da der Sekundärbereich gegenüber dem Primärbereich so abgeschlossen ist, dass eine Kontamination der Milch durch eine Spül- und/oder eine Desinfektions- und/oder Reinigungsflüssigkeit nicht eintreten kann.

Bevorzugt handelt es sich bei dem Sekundärbereich wenigstens um eine zum Fördern der Milch aus dem Pufferspeicher oder dem Melkgefäß geeignete Einrichtung. Hierbei kann es sich beispielsweise um eine Milchpumpe handeln. Mit der Einrichtung sind Leitungen verbunden, durch die die Milch wahlweise abgeleitet wird. Eine Flüssigkeit zum Reinigen des sekundären Bereichs wird durch eine Spülleitung dem sekundären Bereich zu- und über eine Leitung abgeleitet. Insbesondere wird vorgeschlagen, dass die Flüssigkeit auch durch die Einrichtung zum Fördern der Milch aus dem Pufferspeicher (oder dem Melkgefäß) durchgeleitet wird. Diese Verfahrensführung hat den Vorteil, dass die Einrichtung auch zum Fördern der Reinigungsflüssigkeit eingesetzt werden kann.

Der Milchtank ist vorzugsweise nicht Bestandteil des sekundären Bereichs, sondern ist diesem nachgeschaltet. Zwischen sekundärem Bereich und Bereich des Milchtanks kann auch noch ein dritter Bereich vorgesehen sein.

Insbesondere wird vorgeschlagen, dass der Reinigungsvorgang des sekundären Bereichs dann durchgeführt wird, wenn die zu erwartende Melkdauer des Tieres ausreichend groß ist.

Entsprechend den Anforderungen an die Hygiene der Melkvorrichtung wird gemäß einer noch weiteren vorteilhaften Ausgestaltung des Verfahrens vorgeschlagen, dass der Reinigungsvorgang nach einer Anzahl von Melkvorgängen oder nach einer Zeit durchgeführt wird. Die Anzahl der Melkvorgänge oder die Zeit kann aus historischen Daten über das Melkverhalten der Tiere einer Herde ermittelt werden.

Unter Ausnutzung moderner Herdenmanagementsysteme werden historische Daten über das Melkverhalten der Tiere bereitgestellt. Aus diesen kann die zu erwartende Melkdauer des Tieres prognostiziert werden. Diese historischen Daten über das Melkverhalten der Tiere einer Herde können auch dazu genutzt werden, die Spanne zu ermitteln, innerhalb der eine verringerte Melkfrequenz vorliegt. Eine solche ist dann gegeben, wenn die Anzahl der Tiere, die den Melkplatz aufsuchen, oder dem Melkplatz zugeführt werden, relativ gering ist innerhalb eines vorgegebenen Zeitintervalls. Während solcher Zeiten können auch intensive Reinigungsvorgänge des primären und/oder des sekundären Bereichs durchgeführt werden. Es besteht auch die Möglichkeit, den primären Bereich und den sekundären Bereich durch entsprechende Maßnahmen so auszubilden, dass diese auch gemeinsam während eines Reinigungsvorgangs gereinigt werden können.

Nach einem anderen erfinderischen Gedanken wird eine Melkvorrichtung mit einer Einrichtung zum Reinigen der milchführenden Teile der Melkvorrichtung vorgeschlagen, wobei die Melkvorrichtung wenigstens zwei Bereiche, einen primären und einen sekundären Bereich, aufweist, und die Einrichtung zum Reinigen der milchführenden Teile so ausgebildet ist, dass die Reinigung der wenigstens zwei Bereiche auch unabhängig voneinander durchgeführt wird. Vorzugsweise sind die Bereiche gegeneinander durch Sperrmittel sperrbar. Bei den Sperrmitteln kann es sich um Ventile oder Schieber handeln, durch die sichergestellt wird, dass die Flüssigkeit, die während des Reinigungsvorgangs des einen Bereichs nicht in die milchführenden Teile des anderen Bereichs gelangt, insbesondere dann, wenn ein Melkvorgang in dem anderen Bereich stattfindet oder gerade stattgefunden hat.

Der primäre Bereich weist vorzugsweise wenigstens einen Zitzenbecher und wenigstens ein mit dem Zitzenbecher verbundenen Pufferspeicher oder ein Melkgefäß, das eine Ableitung hat, auf. In dem Pufferspeicher wird die während des Melkvorgangs gemolkene Milch gesammelt. Die Flüssigkeit zum Reinigen des ersten Bereichs wird durch das Melkzeug ein- und über eine Ableitung abgeleitet. Während die Milch, die gerade gemolken wird, in dem Pufferspeicher gesammelt wird, kann ein Reinigungsvorgang des zweiten Bereichs durchgeführt werden.

Möglich ist auch, dass der primäre Bereich ein Melkzeug umfasst.

Der sekundäre Bereich weist wenigstens eine zum Fördern der Milch aus dem Pufferbehälter oder Pufferspeicher geeignete Einrichtung sowie mit der Einrichtung verbundene Leitungen auf, durch die die Milch wahlweise abgeleitet wird. Die Milch kann beispielsweise über eine erste Leitung in einen Tank für verwertbare Milch oder über eine zweite Leitung in einen Tank für nicht verwertbare Milch geführt werden. Der sekundäre Bereich weist des weiteren eine Spülleitung zum Zuführen einer Flüssigkeit zum Reinigen des sekundären Bereichs und eine Ableitung zum Ableiten der Flüssigkeit auf. Die Ableitung ist vorzugsweise mit der Einrichtung zum Fördern der Milch verbunden. Die Leitungen sind wahlweise über Ventile schaltbar.

Nach einer noch weiteren vorteilhaften Ausgestaltung der Melkvorrichtung wird vorgeschlagen, dass die Spülleitung mit der Leitung verbunden ist. Durch diese Maßnahme wird die Möglichkeit geschaffen, dass eine Flüssigkeit durch Einleiten in die Leitung auch durch die Einrichtung zum Fördern der Milch hindurchgeführt werden kann.

Zu einer noch weiteren Steigerung der Effektivität des Melksystems wird vorgeschlagen, dass wenigstens zwei sekundäre Bereiche vorgesehen sind, die abwechselnd einem Reinigungsvorgang unterzogen werden.

Weitere Einzelheiten und Vorteile des erfindungsgemäßen Verfahrens sowie der Melkvorrichtung werden anhand der in der Zeichnung dargestellten Ausführungsbeispiele erläutert, ohne dass der Gegenstand der Erfindung auf diese konkreten Ausführungsbeispiele beschränkt wird. Es zeigen:
Fig. 1 schematisch ein erstes Ausführungsbeispiel einer Melkvorrichtung,
Fig. 2 schematisch ein zweites Ausführungsbeispiel einer Melkvorrichtung und

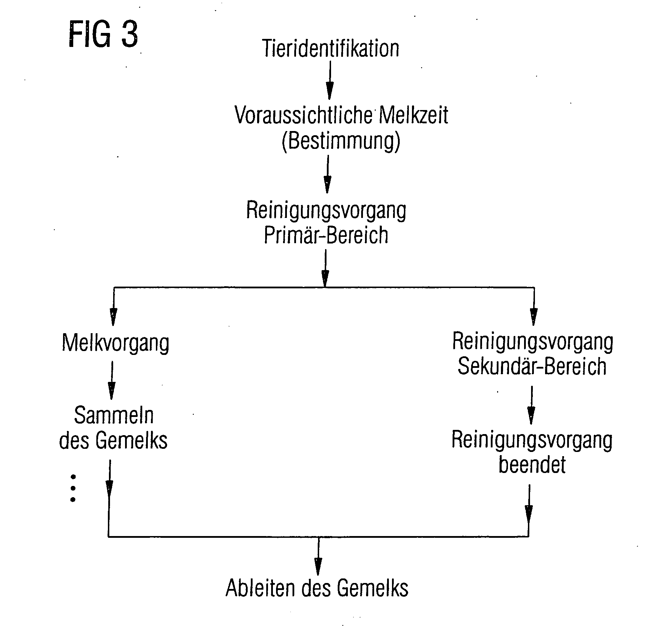

Fig. 3 ein Diagramm eines Verfahrensablaufs.

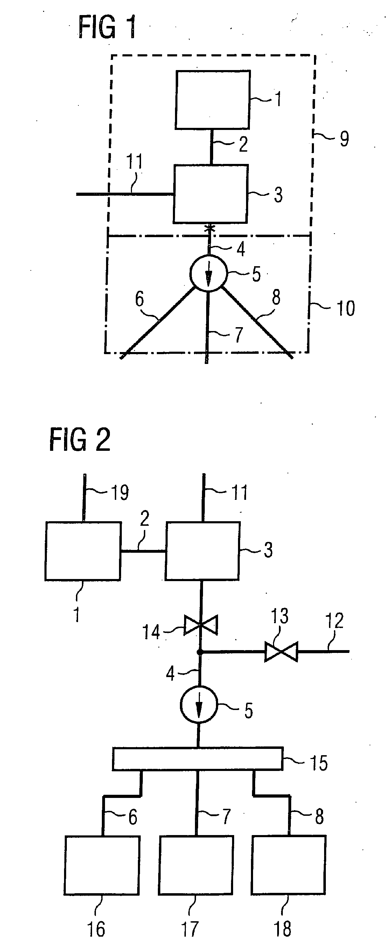

Fig. 1 zeigt ein erstes Ausführungsbeispiel einer erfindungsgemäßen Vorrichtung.

Die erfindungsgemäße Vorrichtung ist in zwei Bereiche unterteilt. Sie weist einen primären Bereich 9, sowie einen sekundären Bereich 10 auf. Die Einrichtung zum Reinigen der milchführenden Teile der Melkvorrichtung ist so ausgebildet, dass die Reinigung der wenigstens zwei Bereiche 9, 10 auch unabhängig voneinander durchgeführt wird.

Der primäre Bereich 9, der gestrichelt dargestellt ist, umfasst ein Melkzeug 1, das mit einem Pufferspeicher 3 durch einen Schlauch 2 verbunden ist. Das Milchgefäß 3 ist dabei so bemessen, dass es ausreichend groß ist, um das Gemelk eines Tieres während eines Melkvorgangs aufzunehmen. Aus sicherheitstechnischen Gründen kann der Pufferspeicher auch etwas größer gestaltet sein, so dass die Gefahr eines Überlaufens vermieden wird.

Das Milchgefäß 3 ist über eine Leitung 4 mit einer Einrichtung 5 zum Fördern der Milch aus dem Melkgefäß 3 verbunden. Bei der Einrichtung 5 handelt es sich in dem dargestellten Ausführungsbeispiel um eine Pumpe. Das Milchgefäß 3 steht mit einer Vakuumquelle durch eine Vakuumleitung 11 in Verbindung. Das Milchgefäß 3 kann daher auch über beispielsweise ein Rückschlagventil verfügen, welches in der Leitung 4 angeordnet ist, so dass die Milch aus dem Milchgefäß durch Belüftung des Milchgefäßes 3 abgeleitet werden kann.

Der sekundäre Bereich 10 umfasst in dem dargestellten Ausführungsbeispiel die Einrichtung 5 zum Fördern der Milch aus dem Milchgefäß 3, sowie Leitungen 6, 7, 8, die mit der Einrichtung verbunden sind. Das Gehäuse der Einrichtung 5 weist hierzu mehrere durch Ventiltechnik zu steuernde Ausgänge auf, so dass eine Flüssigkeit die Einrichtung 5 zum Fördern der Milch in die unterschiedliche Leitungen 6, 7 oder 8 eingeleitet werden kann. Die Leitung 8 kann beispielsweise mit einem Tank für verwertbare Milch verbunden sein. Die Leitung 7 dient beispielsweise zum Ableiten der nicht verwertbaren Milch. Durch die Leitung 8 wird beispielsweise eine Flüssigkeit, die zu Reinigungszwecken in die Melkvorrichtung eingeleitet wurde, abgeführt.

Durch einen nicht dargestellten Spülautomaten können Spül- und/oder Desinfektions- und/oder Reinigungsflüssigkeiten bereitgestellt werden. Zweckmäßig ist es, wenn der Spülautomat eine Wiederverwertung der Flüssigkeit zulässt. Hierzu kann der Spülautomat mit dem Primärbereich und/oder dem Sekundärbereich so geschaltet werden, dass ein Kreislauf für die Flüssigkeit entsteht.

Fig. 2 zeigt ein zweites Ausführungsbeispiel der erfindungsgemäßen Melkvorrichtung mit einer Einrichtung zum Reinigen der milchführenden Teile einer Melkvorrichtung. Die Melkvorrichtung weist schematisch dargestelltes Melkzeug 1 auf. Das Melkzeug 1 ist über eine Leitung 2 mit einem Milchgefäß 3 verbunden. Das Milchgefäß 3 ist über eine Vakuumleitung 11 mit einer nicht dargestellten Vakuumquelle verbunden. Des weiteren weist das Milchgefäß 3 eine Verbindung mit einer Einrichtung 5 zum Fördern der Milch aus dem Milchgefäß 3 auf.

Die Einrichtung 5 ist über eine Ventileinheit 15 mit einem Tank 16 für verwertbare Milch, einem Tank 17 für nicht verwertbare Milch und einem Auffangbehälter 18 verbunden. Hierzu sind entsprechende Leitungen 6, 7, 8 vorgesehen. Die Ventileinheit 15 weist entsprechende Ventile auf, bei denen es sich auch um Mehrwegeventile handeln kann, so dass je nach Bedarf und Anforderung eine Verbindung der Einrichtung 5 mit dem Tank 16 für verwertbare Milch, dem Tank 17 für nicht verwertbare Milch, bzw. mit dem Auffangbehälter 18 ermöglicht wird.

Mit 12 ist eine Spülleitung bezeichnet, durch die eine Flüssigkeit zugeführt werden kann. Die Spülleitung 12 mündet in die Leitung 4 zwischen dem Milchgefäß 3 und der Einrichtung 5. Innerhalb der Spülleitung 12 ist ein Ventil 13 vorgesehen. In Strömungsrichtung betrachtet, d.h. in Fließrichtung der Milch vom Milchgefäß 3 zur Einrichtung 5, ist oberhalb der Mündung der Spülleitung 12 ein Ventil 14 vorgesehen.

Mit 19 ist eine Zuleitung bezeichnet, durch die eine Flüssigkeit zum Spülen, Desinfizieren und/oder Reinigen des Melkzeugs und des Milchgefäßes zugeführt werden kann.

Handelt es sich bei den zu melkenden Tieren um Tiere, die Identifikationsmittel tragen und verfügt der Milchviehbetrieb, in dem sich die erfindungsgemäße Melkvorrichtung befindet, über ein modernes Herdenmanagementsystem, so stehen tierindividuelle Daten zur Verfügung, die Auskunft über die Historie des Tiere geben können. Aus diesen Daten ist beispielsweise die Milchmenge und die Melkzeit sowie gegebenenfalls der Lactationsstand des Tieres bekannt. Erfolgt eine Identifikation des Tieres vor der Melkvorrichtung, so kann eine voraussichtliche Melkzeit prognostiziert werden.

Bevor das Tier dem Melkvorgang unterzogen wird, ist in dem Primärbereich ein Reinigungsvorgang durchgeführt worden, so dass der Primärbereich zumindest gespült wurde. Hierzu ist über die Zuleitung 19 in das Melkzeug 1 eine Spülflüssigkeit eingeleitet worden, die über die Leitung 2 in das Milchgefäß 3 eingeleitet wurde. Von dem Milchgefäß 3 verlässt die Spülflüssigkeit das Milchgefäß 3 über die Einrichtung 5 bei entsprechender Schaltung der Ventile 14 sowie der Ventileinheit 15 in den Auffangbehälter 18 (Fig. 2).

Ist festgestellt worden, dass die Melkzeit, die für das aktuelle Tier prognostiziert wurde, größer ist als der Zeitbedarf für die Durchführung einer Reinigung des Sekundärbereichs, so wird während des Melkvorgangs ein Reinigungsvorgang des Sekundärbereichs durchgeführt. Hierzu ist das Ventil 14 in der Leitung 4 geschlossen. Über die Spülleitung 12 und das offene Ventil 13 wird eine Spül-, Desinfektions- und/oder eine Reinigungsflüssigkeit zugeleitet. Die Flüssigkeit durchströmt die Einrichtung 5 zum Fördern der Milch, sowie die Ventileinheit 15 und gelangt über die Leitung 8 in den Auffangbehälter 18. Von dem Auffangbehälter 18 kann die Flüssigkeit beispielsweise in einen Spülautomaten übergeleitet werden, wobei der Spülautomat auch Aufbereitungseinrichtungen enthalten kann, durch die die Flüssigkeit für einen weiteren Reinigungsvorgang genutzt werden kann. Bei Bedarf können die Bauteile der Melkvorrichtung durch Luft getrocknet werden.

Die während des Melkvorgangs gewonnene Milch wird in dem Milchgefäß 3 gesammelt. Ist der Melkvorgang und der Reinigungsvorgang des Sekundärbereichs ebenfalls beendet, so wird die Milch 3 aus dem Milchsammelgefäß beispielsweise in den Tank 16 für verwertbare Milch geleitet. Um sicherzustellen, dass keine Kontamination der Milch mit der Flüssigkeit zum Spülen, Desinfizieren oder Reinigen erfolgt, ist das Ventil 13 geschlossen. Gleichfalls ist die Ventileinheit 15 eingeschaltet, so dass die Milch lediglich in den Tank 16 über die Leitung 6 gelangen kann. Durch Öffnen des Ventils 14 wird die Milch aus dem Milchsammelgefäß abgeleitet. Es kann ein Reinigungsvorgang des Primärbereichs durchgeführt werden.

Die Flüssigkeit kann unter Druck oder drucklos unter Zuhilfenahme von Unterdruck bis zum Milchgefäß 3 geleitet werden und dort direkt in die Leitungen oder besser über die Einheit zum Fördern der Milch in die zu reinigenden Leitungen eingelassen werden. Die Spülleitung wird von einem Spülautomat mit entsprechender Spüllösung versorgt, beziehungsweise zieht sich unter Anlegen eines Vakuums eine wie auch immer vorbereitete Spüllösung aus einem Behälter.

Über das Melkzeug 1 kann ein Zwischenspülen mit Wasser oder mit Reinigungsoder Desinfektionslösung erfolgen. Diese Flüssigkeit wird über die Einheit 5 in die Leitung 8 abgeführt. In dieser Zwischenzeit kann ein neues Tier die Melkbox aufsuchen. Ein abschließendes Durchspülen mit klarem Wasser beendet das Zwischenspülen.

Nach einigen Stunden kann eine turnusgemäße, normale Reinigung der Melkanlage durchgeführt werden. Vorzugsweise wird diese Reinigung der Melkanlage in solche Zeitabschnitte gelegt, in denen eine relativ geringe Melkfrequenz vorliegt.

Durch das erfindungsgemäße Verfahren sowie die erfindungsgemäße Vorrichtung wird die Möglichkeit geschaffen, insbesondere in automatischen Melksystemen eine Durchführung der Reinigung der Melkanlage unabhängig vom Melkvorgang vorzusehen, so dass die Effektivität der Anlage verbessert wird.

### Bezugszeichenliste:

- 1: Melkzeug
- 2: Schlauch
- 3: Melkgefäß
- 4: Leitung
- 5: Einrichtung zum Fördern der Milch
- 6: Leitung
- 7: Leitung
- 8: Leitung
- 9: primärer Bereich
- 10: sekundärer Bereich
- 11: Vakuumleitung
- 12: Spülleitung
- 13: Ventil
- 14: Ventil
- 15: Ventileinheit
- 16: Tank für verwertbare Milch
- 17: Tank für nicht verwertbare Milch
- 18: Auffangbehälter
- 19: Zuleitung

## Patentansprüche

1. Verfahren zum Reinigen der milchführenden Teile einer Melkvorrichtung, bei dem die milchführenden Teile in wenigstens zwei Bereiche, in einen primären und einen sekundären Bereich (9, 10) unterteilt sind, und bei dem der primäre Bereich wenigstens einen Zitzenbecher und einen Pufferspeicher umfasst und bei dem der sekundäre Bereich dem primären Bereich nachgeschaltet ist, wobei die Reinigung der wenigstens zwei Bereiche (9, 10) auch unabhängig voneinander durchgeführt wird.

2. Verfahren nach Anspruch 1, bei dem während des Melkens der sekundäre Bereich gereinigt wird.

3. Verfahren nach Anspruch1 oder 2, bei dem wenigstens ein dritter Bereich vorgesehen ist.

4. Verfahren nach Anspruch 1, 2 oder 3, bei dem der Druckbereich unabhängig vom Vakuumbereich gereinigt wird.

5. Verfahren nach einem der vorhergehenden Ansprüche, bei dem der primäre Bereich (9) zwischen zwei aufeinanderfolgenden Melkvorgängen gereinigt wird.

6. Verfahren nach einem der vorhergehenden Ansprüche, bei dem eine Flüssigkeit zum Reinigen des primären Bereichs (9) durch mindestens einen Zitzenbecher oder ein Melkzeug (1) eingeleitet, vorzugsweise über eine Ableitung abgeleitet wird.

7. Verfahren nach einem der vorhergehenden Ansprüchen, bei dem ein Reinigungsvorgang des primären Bereichs (9) dann durchgeführt wird, wenn die Zeitspanne zwischen zwei Melkvorgängen ausreichend groß ist.

8. Verfahren nach einem der vorhergehenden Ansprüchen, bei dem eine Flüssigkeit zum Reinigen des sekundären Bereichs (10) durch eine Spülleitung (12) dem sekundären Bereich zugeleitet und vorzugsweise über die Ableitung (8) abgeleitet wird.

9. Verfahren nach Anspruch 7 oder 8, bei dem die Milch aus dem sekundären Bereich (10) durch wenigstens eine Fördereinrichtung (5) gefördert und vorzugsweise durch die Fördereinrichtung (5) hindurchgeleitet wird.

10. Verfahren nach einem der Ansprüche 1 bis 9, bei dem der Reinigungsvorgang des sekundären Bereichs (10) dann durchgeführt wird, wenn die zu erwartende Melkdauer des Tieres ausreichend groß ist.

11. Verfahren nach einem der Ansprüche 1 bis 10, bei dem der Reinigungsvorgang nach einer Anzahl von Melkvorgängen oder nach einer Zeitdauer durchgeführt wird.

12. Verfahren nach einem der Ansprüche 1 bis 11, bei dem ein Zeitpunkt eines Reinigungsvorgangs aus historischen Daten über das Melkverhalten der Tiere einer Herde ermittelt wird.

13. Verfahren nach einem der Ansprüche 1 bis 12, bei dem wenigstens zwei Sekundärbereiche (10) vorgesehen sind, die abwechselnd, gleichzeitig oder nacheinander einem Reinigungsvorgang unterzogen werden.

14. Melkvorrichtung mit einer Einrichtung zum Reinigen der milchführenden Teile einer Melkvorrichtung, **dadurch gekennzeichnet, dass** die Melkvorrichtung wenigstens zwei Bereiche, einen primären und einen sekundären Bereich (9, 10), aufweist, und bei dem der primäre Bereich wenigstens einen Zitzenbecher und einen Pufferspeicher umfasst und bei dem der sekundäre Bereich dem primären Bereich nachgeschaltet ist, wobei diese so ausgebildet sind, dass die Reinigung der wenigstens zwei Bereiche (9, 10) auch unabhängig voneinander durchführbar ist.

15. Melkvorrichtung nach Anspruch 14, **dadurch gekennzeichnet, dass** die wenigstens zwei Bereiche (9, 10) voneinander durch Sperrmittel, insbesondere Ventile (14) trennbar sind.

16. Melkvorrichtung nach Anspruch 14 oder 15, **dadurch gekennzeichnet, dass** der primäre Bereich (9) wenigstens einen Zitzenbecher oder ein Melkzeug (1), ein mit dem Melkzeug (1) verbundenes Pufferspeicher (3), das eine Ableitung aufweist, umfasst und eine Flüssigkeit zum Reinigen des primären Bereichs (9) durch das Melkzeug (1) ein- und über die Ableitung ableitbar ist.

17. Melkvorrichtung nach Anspruch 14, 15 oder 16, **dadurch gekennzeichnet, dass** der sekundäre Bereich (10) wenigstens eine zum Fördern der Milch aus dem Pufferspeicher (3) geeignete Einrichtung (5) sowie mit der Einrichtung (5) verbundene Leitungen (6, 7, 8), durch die die Milch wahlweise abgeleitet wird, aufweist, wobei eine Spülleitung (12) zum Zuführen einer Flüssigkeit zum Reinigen des sekundären Bereichs (10) und eine Ableitung zum Ableiten der Flüssigkeit vorgesehen sind.

18. Melkvorrichtung nach Anspruch 16 oder 17, **dadurch gekennzeichnet, dass** die Spülleitung (12) mit der Leitung (4) verbunden ist.

19. Melkvorrichtung nach einem der Ansprüche 14 bis 18, **dadurch gekennzeichnet, dass** wenigstens ein dritter Bereich oder wenigstens zwei sekundäre Bereiche (10) vorgesehen sind.
